# EUROPEAN PATENT SPECIFICATION

(11) **EP 2 583 549 B1**
(45) Date of publication and mention of the grant of the patent: **26.03.2014**
(21) Application number: 11795356.2
(22) Date of filing: 31.05.2011
(51) Int. Cl.: A01K 61/00, E02B 3/18

(54) **METHOD FOR DEVELOPING LAND**
VERFAHREN ZUR LANDENTWICKLUNG
PROCÉDÉ DE DÉVELOPPEMENT DES TERRES

(30) Priority: 18.06.2010 JP 2010139276
(43) Date of publication of application: 24.04.2013
(73) Proprietor: Statice Co., Ltd., Tokyo 121-0064 (JP)
(72) Inventor: HOSHINO, Akihiro, Tokyo 121-0064 (JP)
(74) Representative: Lacey, Dean Andrew
(86) International application number: PCT/JP2011/003070
(87) International publication number: WO 2011/158448

(56) References cited:
- JP-A- 2006 257 852
- JP-A- 2008 017 789
- JP-B1- 4 606 515
- US-A- 4 047 390

## Description

### Technical Field

The present invention relates to a method for developing land such as an island.

### Background Art

In small islands such as Okinotori Islands, for example, coastlines are disappearing due to coastal erosion and rising sea level caused by global warming, and these islands are at risk of going underwater. To deal with this, measures for solving the problem of coastal erosion have been taken, which include placing a plurality of concrete blocks on the sea bottom near the coast so as to absorb the force of approaching waves.

In Patent Document 1, for example, a method of building a natural rock block that is formed by mounting natural rocks on the surface of a concrete block is disclosed. By placing these natural rock blocks on the ground, the current velocity and wave force can be stabilized while maintaining the natural ecosystem, without sacrificing the natural landscape.

As a solution to the problem of disappearing coastline, a method of placing concrete blocks on the sea bottom and growing coral thereon has been implemented. In Patent Document 2, for example, a method for naturally developing coastline is disclosed. In this method, blocks for growing coral that have implantation surfaces on which coral is to be implanted are prepared, live coral is implanted on the implantation surfaces by an adhesive agent, and those blocks are stacked on the sea bottom near the coast to allow the coral to grow thereon, thereby naturally expand the coastline.

### Related Art Documents

### Patent Documents

Patent Document 1: Japanese Patent Application Laid-Open Publication No.H7-331636
Patent Document 2: Japanese Patent Application Laid-Open Publication No. 2008-017789

### SUMMARY OF THE INVENTION

### Problems to be Solved by the Invention

However, the above-mentioned methods for building natural rock blocks and growing coral had the following problem.

The function of the natural rock block is nothing more than that of a general concrete block that breaks approaching waves. Also, because coral can only grow in the water, with the conventional coral growing method, which is designed to be implemented underwater, it is not possible to allow coral to grow above water. Therefore, those methods cannot effectively address problems such as rising sea level due to global warming, which is another factor for the vanishing coastline, and thus cannot provide a fundamental solution to the disappearing islands.

Under the United Nations Convention on the Law of the Sea (signed in 1982, came into force in 1996; the Law of the Sea treaty), an island is defined as "a naturally formed area of land, surrounded by water, which is above water at high tide." Therefore, with the method for building the natural rock block and the method for growing coral described above, it is not possible to develop an island.

The present invention was made in view of the above-mentioned problems, and aims at providing a method for developing land through the workings of nature.

### Means for Solving the Problems

In order to achieve the above-mentioned object, a method for developing land according to the present invention includes: covering an island with a sealing dome larger than an aboveground portion of the island such that a space is created between the island and the sealing dome and such that a lower edge of the sealing dome is located in the sea; securing the sealing dome, while leaving a gap between the lower edge of the sealing dome and a sea bottom; reducing the air pressure inside the sealing dome such that a water level inside the sealing dome rises above the island to allow coral to naturally grow on the island, thereby developing land. Here, "securing" means not only firmly fastening an object by using a bolt and the like, but also moveably fastening an object by a wire or a spring.

In the method for developing land according to the present invention, it is preferable that the sealing dome have an arc-shaped cross section.

Another method for developing land according to the present invention includes: covering an underwater rock with a sealing dome larger than a portion of the underwater rock that becomes an aboveground portion such that a space is created between the underwater rock and the sealing dome and such that a lower edge of the sealing dome is located in the sea; securing the sealing dome, while leaving a gap between the lower edge of the sealing dome and the sea bottom; increasing the air pressure inside the sealing dome such that a water level inside the sealing dome lowers and the underwater rock is exposed above sea-level, thereby increasing an area of land.

### Effects of the Invention

According to the present invention, by reducing the air pressure inside the sealing dome, the water level in the sealing dome can be raised above the island, allowing the coral to naturally grow on the island. This makes it possible to develop land through the workings of nature.

When the sealing dome has an arc-shaped cross section, the sealing dome can be provided with a sufficient strength to withstand the atmosphere pressure acting thereon when the air pressure is reduced.

Further, according to the present invention, by increasing the air pressure inside the sealing dome so as to lower the water level in the sealing dome, the underwater rock is exposed above sea-level, increasing an area of land. This makes it possible to develop land through the workings of nature.

### BRIEF DESCRIPTION OF THE DRAWINGS

FIG. 1 is a schematic cross-sectional view showing a method for developing land according to an embodiment of the present invention.
FIG. 2 is a schematic cross-sectional view showing a method for developing land according to a second embodiment of the present invention.

### DETAILED DESCRIPTION OF EMBODIMENTS

Below, embodiments of the present invention will be explained in detail with reference to figures.

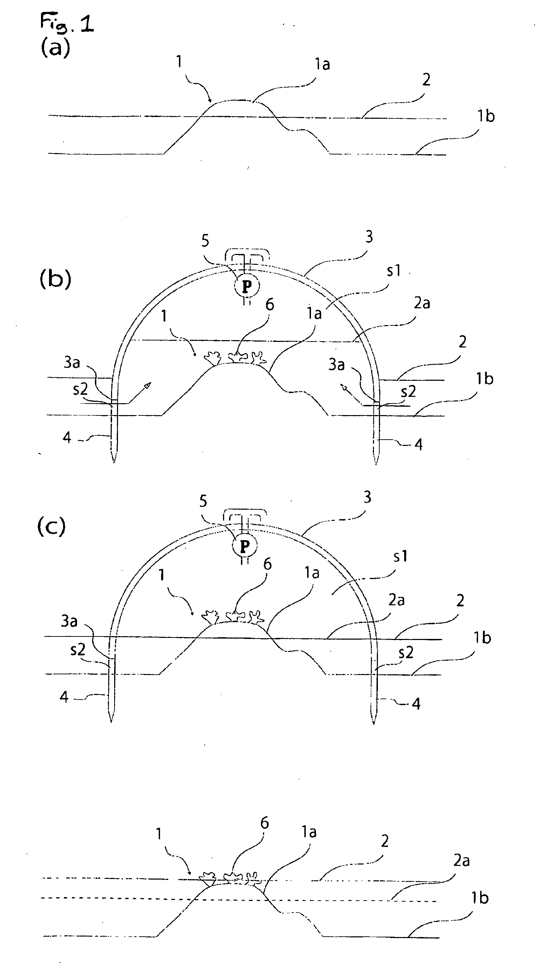

FIG. 1 is a schematic cross-sectional view showing a method for developing land according to an embodiment of the present invention. As shown in FIG. 1(a), an island 1 has an aboveground portion 1a exposed above the sea level 2.

In the method for developing land of the present embodiment, in this state, the island 1 is covered with a sealing dome 3 larger than the aboveground portion 1 a such that a space s 1 is created between the island 1 and the sealing dome 3 and such that a lower edge 3a of the sealing dome 3 is located in the sea, i.e., below the sea level 2 as shown in FIG. 1(b). Because of the arc-shaped cross section, the sealing dome 3 has a sufficient strength to withstand the atmosphere pressure acting thereon when the air pressure is reduced. It is preferable that the sealing dome 3 be made of a transparent material that is light and strong such as polycarbonate, but other materials may also be used.

Next, leaving a gap s2 between the lower edge 3a of the sealing dome 3 and a sea bottom 1b, piles 4 secured to the lower edge 3 a of the sealing dome 3 with bolts (not shown) are driven into the sea bottom 1b to secure the sealing dome 3. The piles 4 can be made of stainless or the like. Because the figure shows a cross-sectional view, only two piles on the right and on the left are shown, but in the actual sealing dome 3, the piles are provided at even intervals along the lower edge 3a.

Next, a pump 5 provided in the sealing dome 3 is actuated to reduce the air pressure inside the sealing dome 3. According to the Pascal's law, as indicated by the arrows in FIG. 1(b), this causes the seawater to be drawn into the sealing dome 3, allowing the sea level 2a inside the sealing dome 3 to rise above the aboveground portion 1a of the island 1.

By leaving the island 1 under this condition, coral 6 will naturally grow on the island 1.

After coral 6 has grown, as shown in FIG. 1(c), the pump 5 is released to make the air pressure inside the sealing dome 3 equal to the atmosphere pressure outside of the sealing dome 3. This causes the sea level 2a inside the sealing dome 3 to lower to the same level as the sea level 2 outside of the sealing dome 3.

Even when the sealing dome 3 is thereafter removed, because the coral skeletons form land, the elevation of the highest point of the island 1 becomes higher than that in the original state. As a result, as shown in FIG. 1(d), even if the sea level 2 rises from the original sea level 2a due to global warming and the like, and the original aboveground portion 1 a is submerged, it would not cause the entire island to be submerged because the elevation of the highest point of the island has been raised by the height of the coral 6. In this way, land can be developed through the workings of nature. Also, by repeating the above-mentioned steps, even if the sea level further rises, the island can be saved from going underwater.

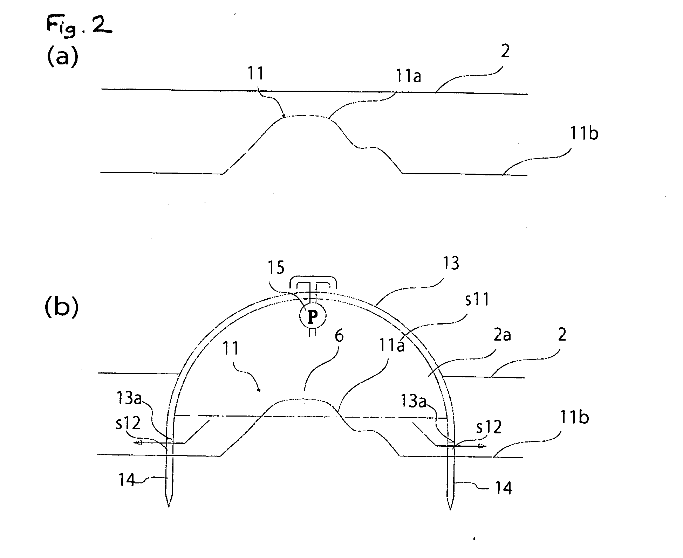

FIG. 2 is a schematic diagram showing a method for developing land according to a second embodiment of the present invention. As shown in FIG. 2(a), a top portion 11a of an underwater rock 11 is not exposed above the sea level 2.

In the method for developing land of the present embodiment, in this state, as shown in FIG. 2(b), the underwater rock 11 is covered with a sealing dome 13 larger than the top portion 11 a thereof that becomes an aboveground portion of the island such that a space s11 is created between the underwater rock 11 and the sealing dome 13 and such that a lower edge 13a of the sealing dome 13 is located in the sea, i.e., below the sea level 2. Because of the arc-shaped cross section, the sealing dome 13 is provided with a sufficient strength to withstand the atmosphere pressure acting thereon when the air pressure is reduced. It is preferable that the sealing dome 13 be made of a transparent material that is light and strong such as polycarbonate, but other materials may also be used.

Next, leaving a gap s12 between the lower edge 13a of the sealing dome 13 and a sea bottom 11 b, piles 14 that are secured to the lower edge 13a of the sealing dome 13 with bolts (not shown) are driven into the sea bottom 11 b to secure the sealing dome 13.

Thereafter, by actuating a pump 15 provided in the sealing dome 13, the air pressure inside the sealing dome 13 is increased. According to the Pascal's Law, this causes the sea level inside the sealing dome 13 to lower to a level below the top portion 11 a of the underwater rock 11 as indicated by the arrows in FIG. 2(b).

By exposing the underwater rock from the sea level as described above, an island can be formed, and an area of land can be increased. Thus, it is possible to develop land through the workings of nature.

In the present embodiment, the island will disappear when the sealing dome 13 is removed. However, even if the sea level 12 further rises, by further increasing the air pressure inside the sealing dome 13, the island can be saved from going underwater.

In implementing the present invention, various modifications can be made without departing from the spirit thereof. For example, the method of increasing or decreasing the pressure inside the sealing dome described above is not limited to the method using a pump, but various known methods can be employed such as a chemical reaction, dissolution into sea water, or reduction of volume by cooling a vapor. In securing the sealing dome to the sea bottom, the sealing dome may be moveably fastened by wires or springs, instead of being firmly fastened by bolts or the like. The sealing dome may be secured to an above-water portion of the island, instead of the sea bottom. The sealing dome may have other cross section shapes than the arc shape, and may be provided with thermal insulating films or solar panels on the surface thereof for temperature control and the like.

As described above, the method for developing land according to the present invention includes: covering an island with a sealing dome larger than an aboveground portion of the island such that a space is created between the island and the sealing dome and such that a lower edge of the sealing dome is located in the sea; securing the sealing dome, while leaving a gap between the lower edge of the sealing dome and the sea bottom; and reducing the air pressure inside the sealing dome such that a water level inside the sealing dome rises above the island to allow coral to naturally grow on the island, thereby developing land. In this method, by reducing the air pressure inside the sealing dome, the water level inside the sealing dome is raised above the island, which allows coral to naturally grow on the island, and therefore, land can be developed through the workings of nature. In the case of increasing the area of land by: covering an underwater rock with a sealing dome larger than a portion of the underwater rock that becomes an aboveground portion such that a space is created between the underwater rock and the sealing dome and such that a lower edge of the sealing dome is located in the sea; securing the sealing dome, while leaving a gap between the lower edge of the sealing dome and the sea bottom; and increasing the air pressure inside the sealing dome such that a water level inside the sealing dome lowers to expose the underwater rock above sea-level, the area of the land can be increased by increasing the air pressure inside the sealing dome such that a water level inside the sealing dome lowers to expose the underwater rock above sea-level. Therefore, it is possible to develop land through the workings of nature.

### Descriptions of Reference Characters

- 1: island
- 2, 12: sea level
- 3, 13: sealing dome
- 4, 14: pile
- 5, 15: pump
- 11: underwater rock

## Claims

1. A method for developing land, comprising:
covering an island with a sealing dome larger than an aboveground portion of the island such that a space is created between the island and the sealing dome and such that a lower edge of the sealing dome is in the sea;
securing the sealing dome, while leaving a gap between the lower edge of the sealing dome and a sea bottom; and
reducing the air pressure inside the sealing dome such that a sea level inside the sealing dome rises above the island to allow coral to naturally grow on the island, thereby developing land.

2. The method for developing land according to claim 1, wherein the sealing dome has an arc-shaped cross section.

3. A method for developing land, comprising:
covering an underwater rock with a sealing dome larger than a portion of the underwater rock that becomes an aboveground portion such that a space is created between the underwater rock and the sealing dome and such that a lower edge of the sealing dome is located in the sea;
securing the sealing dome, while leaving a gap between the lower edge of the sealing dome and a sea bottom; and
increasing the air pressure inside the sealing dome such that a water level inside the sealing dome lowers and the underwater rock is exposed above sea-level, thereby increasing an area of land.

## Patentansprüche

1. Verfahren zum Entwickeln von Land, mit folgenden Schritten:
- Bedecken einer Insel mit einem Abdichtungsdom, welcher größer ist, als ein über Grund liegender Abschnitt der Insel, derart, dass zwischen der Insel und dem Abdichtungsdom ein Raum geschaffen wird und derart, dass eine untere Kante des Abdichtungsdoms im Meer liegt;
- Befestigen des Abdichtungsdoms, während ein Spalt zwischen der oberen Kante des Abdichtungsdoms und einem Meeresboden gelassen wird; und
- Vermindern des Luftdrucks innerhalb des Abdichtungsdoms derart, dass ein Meeresspiegel in dem Abdichtungsdom über die Insel ansteigt, um zu ermöglichen, dass auf der Insel auf natürliche Weise Korallen wachsen, wodurch Land entwickelt wird.

2. Verfahren zum Entwickeln von Land nach Anspruch 1, bei welchem der Abdichtungsdom einen bogenförmigen Querschnitt hat.

3. Verfahren zum Entwickeln von Land, mit folgenden Schritten:
- Bedecken eines Unterwasserfelsens mit einem Abdichtungsdom, welcher größer ist als ein Abschnitt des Unterwasserfelsens, welcher zu einem über Grund befindlichen Abschnitt wird, derart, dass zwischen dem Unterwasserfelsen und dem Abdichtungsdom ein Raum geschaffen wird und derart, dass eine untere Kante des Abdichtungsdoms im Meer angeordnet ist;
- Befestigen des Abdichtungsdoms, während zwischen der unteren Kante des Abdichtungsdoms und einem Meeresboden ein Spalt gelassen wird; und
- Anheben des Luftdrucks innerhalb des Abdichtungsdoms, derart, dass ein Wasserspiegel innerhalb des Abdichtungsdoms fällt und der Unterwasserfelsen über dem Meeresspiegel freigelegt wird, wodurch ein Bereich von Land vergrößert wird.

## Revendications

1. Procédé de développement de terres, comportant les étapes consistant à :
couvrir une île d'un dôme d'étanchéité plus large qu'une partie de surface de l'île de telle sorte qu'un espace est créé entre l'île et le dôme d'étanchéité et de telle sorte qu'un bord inférieur du dôme d'étanchéité se trouve dans la mer,
fixer le dôme d'étanchéité, tout en laissant un espace entre le bord inférieur du dôme d'étanchéité et le fond de la mer, et
réduire la pression de l'air à l'intérieur du dôme d'étanchéité de telle sorte que le niveau de la mer à l'intérieur du dôme d'étanchéité s'élève au-dessus de l'île pour permettre au corail de se développer naturellement sur l'île, développant ainsi la terre.

2. Procédé de développement de terres selon la revendication 1, dans lequel le dôme d'étanchéité a une section transversale en forme d'arc.

3. Procédé de développement de terres, comportant les étapes consistant à :
recouvrir une roche sous-marine d'un dôme d'étanchéité plus large qu'une partie de la roche sous-marine qui devient une partie de surface de telle sorte qu'un espace est créé entre la roche sous-marine et le dôme d'étanchéité et de telle sorte qu'un bord inférieur du dôme d'étanchéité est situé dans la mer,
fixer le dôme d'étanchéité, tout en laissant un espace entre le bord inférieur du dôme d'étanchéité et le fond de la mer, et
augmenter la pression d'air à l'intérieur du dôme d'étanchéité de telle sorte qu'un niveau d'eau à l'intérieur du dôme d'étanchéité baisse et la roche sous-marine est exposée au-dessus du niveau de la mer, de manière à augmenter une zone de terre.
